# FASCICULE DE BREVET EUROPEEN

(11) **EP 1 577 050 B1**
(45) Date de publication et mention de la délivrance du brevet: **23.05.2007**
(21) Numéro de dépôt: 04101125.5
(22) Date de dépôt: 18.03.2004
(51) Int. Cl.: B23Q 1/00, B23Q 3/155

(54) **Dispositif de changement d'outils**
Werkzeugswechselvorrichtung
Tool change apparatus

(43) Date de publication de la demande: 21.09.2005
(73) Titulaire: TESA SA, 1020 Renens (CH)
(72) Inventeur: Vullioud, Benjamin, 1302 Vufflens-la-Ville (CH); Rouge, Claude, 1446 Balmes (CH); Jordil, Pascal, 1612 Ecoteaux (CH)
(74) Mandataire: P&TS Patents & Technology Surveys SA

(56) Documents cités:
- CH-A- 681 967
- DE-A- 3 151 532
- US-A- 4 706 372
- US-B1- 6 276 864

## Description

La présente invention se rapporte à un dispositif de changement d'outil selon le préambule de la revendication 1 pour connecter deux éléments mécaniques de façon précise et répétable, par action manuelle ou sous l'action d'un servomécanisme approprié.

La présente invention se prête spécialement, mais pas uniquement à la connexion entre un palpeur et une tête articulée d'une machine pour la mesure de cordonnées. Toutefois le type de connexion de l'invention pourrait aussi bien s'appliquer en un grand nombre de situations différentes où une connexion mécanique à la fois rapide et exacte est requise. En particulier le dispositif de la présente invention peut par exemple être employée pour la connexion d'une camera vidéo, ou pour tout autre capteur connu.

Des dispositifs permettant de changer les outils d'une machine à mesurer des cordonnées de manière manuelle ou automatique sont connus. Ces dispositifs prévoient parfois des accouplements à vis ou à baïonnette. Le plus souvent ces accouplements prévoient plusieurs surfaces de positionnement arrangées pour donner lieu à une connexion isostatique, ayant un degré de répétabilité élevé.

Le Brevet européen EP142373 décrit un dispositif de changement d'outils comprenant un porte-outil muni d'un excentrique creux dans lequel s'engage la tête d'un adaptateur. La rotation de l'excentrique entraîne directement la tête de l'adaptateur joignant aussi les deux parties.

Ces dispositifs de changement présentent toutefois l'inconvénient que l'outil peut se détacher de l'adaptateur si l'opérateur oublie de verrouiller la connexion.

Dans le brevet US6276864 est divulgué un dispositif de changement d'outils dans lequel le porte-outil est muni d'un téton avec une gorge, dans laquelle vont s'engager des billes du porte-outil.

Ce dispositif comporte un actionnement pneumatique qui doit être mis sous pression pour détacher ou pour insérer un outil.

Certains de ces dispositifs de changement, et notamment ceux qui se basent sur une connexion à vis ou à baïonnette, prévoient une rotation de l'outil, et ne permettent pas un nombre élevé de connexions électriques entre l'outil et la machine de mesure.

Un autre inconvénient des dispositifs de l'art antérieur, et notamment des dispositifs dans lesquels un excentrique agit directement sur un élément fixe de l'adaptateur, est que la force de serrage n'est pas orientée le long de l'axe du porte-outil, ou génère des couples de torsion ou de flexion, en sorte que, lors du verrouillage, les forces exercées sur les surfaces de positionnement ne sont pas distribuées symétriquement, ce qui peut induire une mauvaise répétabilité de positionnement.

Un but de la présente invention est de fournir un dispositif de connexion et de changement d'outil et un procédé de fixation d'un outil sur une machine exempt des limitations de l'art antérieur. En particulier un but de la présente invention est de proposer un dispositif de changement d'outils dans lequel l'outil peut être retenu sans qu'aucune opération de verrouillage soit nécessaire.

Un autre but de la présente invention est de proposer un dispositif et un procédé dans lequel les forces de verrouillage sont alignées avec l'axe de symétrie de manière d'assurer une égale répartition des forces entre les surfaces de positionnement.

Un autre but de la présente invention est de proposer un dispositif de changement d'outils plus simple et plus exact que les dispositifs de l'art antérieur.

Selon l'invention ces buts sont atteints par le dispositif faisant l'objet de la revendication 1 et par le procédé de la revendication 12.

La présente invention sera mieux comprise à la lecture des revendications ci-jointes et de la description donnée à titre d'exemple et illustrée par les figures annexées dans lesquelles :
- la figure 1 représente un porte-outil selon un premier mode de réalisation de l'invention ;
- les figures 2 et 3 représentent des composants du porte-outil de la figure 1 ;
- les figures 4 et 5 représentent le porte-outil de la figure 1 partiellement assemblé ;
- les figures 6 et 6a représentent deux vues du porte-outil de la figure 1 assemblé ;
- les figures 7 et 8 représentent le porte-outil avec son adaptateur correspondant ;
les figures 9, 10 et 11 représentent en coupe l'action de verrouillage d'un dispositif selon l'invention ;
- les figures 12 et 13 représentent un mode de réalisation ultérieur de l'invention;
- la figure 14 représente un mode de réalisation ultérieur de l'invention ;
- la figure 15 représente un mode de réalisation ultérieur de l'invention ;
- les figures 16, 17 et 18 représentent un exemple ultérieur de connecteur.

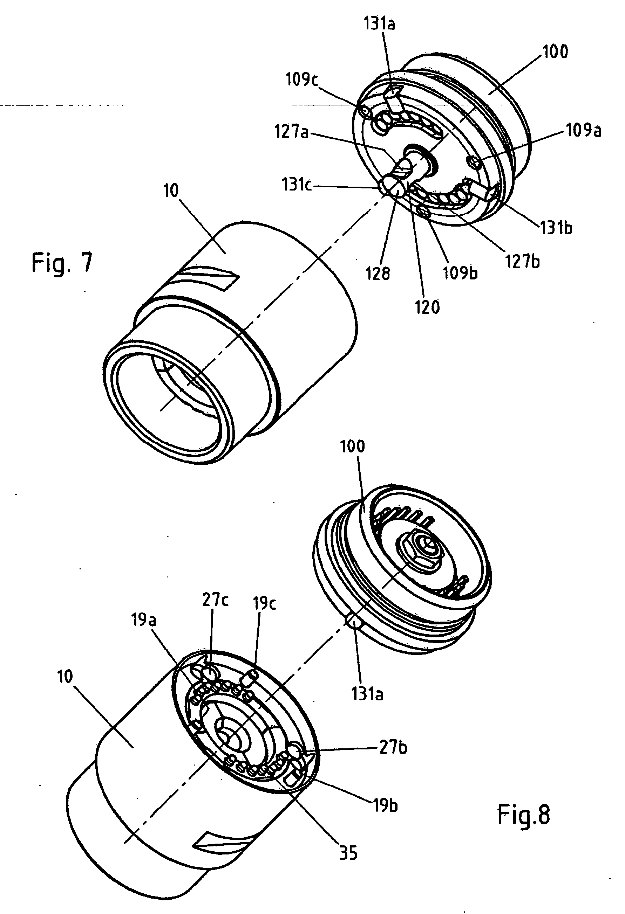

Dans un premier mode de réalisation de l'invention, décrit maintenant avec référence aux figures 7 et 8, le dispositif de l'invention comprend un adaptateur 100, destiné à être fixée au bras de la machine de mesure et un porte-outil détachable 10, pour la fixation au palpeur ou à l'accessoire.

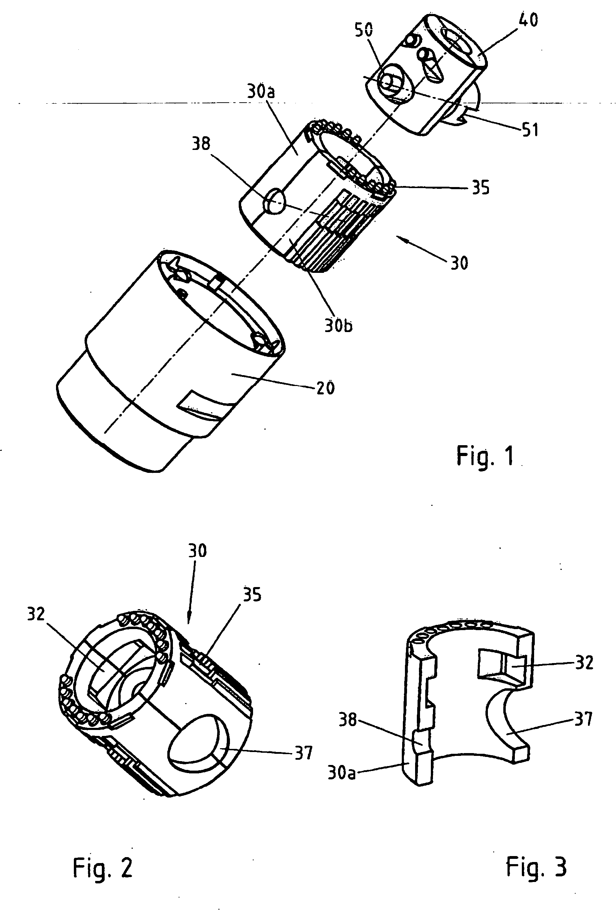

Se referant maintenant aux figures 1-5 le porte-outil 10 comprend un corps cylindrique 20, une douille fixe 30 et une douille intérieure mobile 40, pouvant coulisser à l'intérieur de la douille fixe 30 et coaxiale avec celle-la. Dans la suite nous allons désigner l'axe des douilles 30 et 40 comme « axe vertical », se référant en cela à une orientation conventionnelle, et pour simplifier le langage uniquement. Le dispositif de l'invention est utilisable en n'importe quelle orientation dans l'espace.

Pour faciliter l'assemblage et l'usinage chacune des douilles 30 et 40 est avantageusement réalisés en deux parties 30a et 30b, respectivement 40a et 40b.

La connexion et la déconnexion de l'adaptateur 100 et du porte-outil 10 sont déterminées par l'action d'un actuateur 50. Dans ce mode de réalisation l'actuateur est un excentrique 50 pouvant tourner autour d'un axe horizontal, défini par les deux ouvertures 37 et 38 de la douille fixe et entraînant verticalement la douille mobile 40. Deux goupilles 53a et 53b sont logés dans deux rainures 47 positionnées en « V » dans la douille mobile 40 et peuvent assumer, en glissant entre lesdites rainures 47 des positions plus ou moins écartées par rapport à l'axe du porte-outil, mais toujours orthogonales à l'axe commun des douilles 30 et 40.

Les extrémités des goupilles 53a et 53b dépassent la surface extérieure de la douille mobile 40 et sont insérées dans deux logements 32 de la douille fixe 30, servant à bloquer la course verticale des deux goupilles. Une rotation de l'excentrique 50 entraîne axialement la douille mobile 40 et engendre soit un mouvement de rapprochement et d'éloignement des goupilles 53a et 53b l'une par rapport à l'autre, soit un mouvement vertical (conventionnellement dans la direction de l'axe) des deux goupilles.

En particulier, la forme des logements 32 est choisie dans ce mode de réalisation de façon à déterminer, dans une première partie de la rotation de l'excentrique 50 entre -90° et 0°, un mouvement de rapprochement ou d'éloignement des goupilles l'une par rapport à l'autre et, dans une deuxième partie de la rotation de l'excentrique 50 entre 0° et 90°, un mouvement vertical des deux goupilles. D'autres dispositions sont toutefois comprises dans la présente invention.

Deux lames ressort 56a et 56b empêchent le libre mouvement des goupilles 53a et 53b dans leur logements respectifs. Ainsi le dispositif peut être utilisé dans toutes les positions, même lorsque l'axe n'est pas orienté selon la direction verticale.

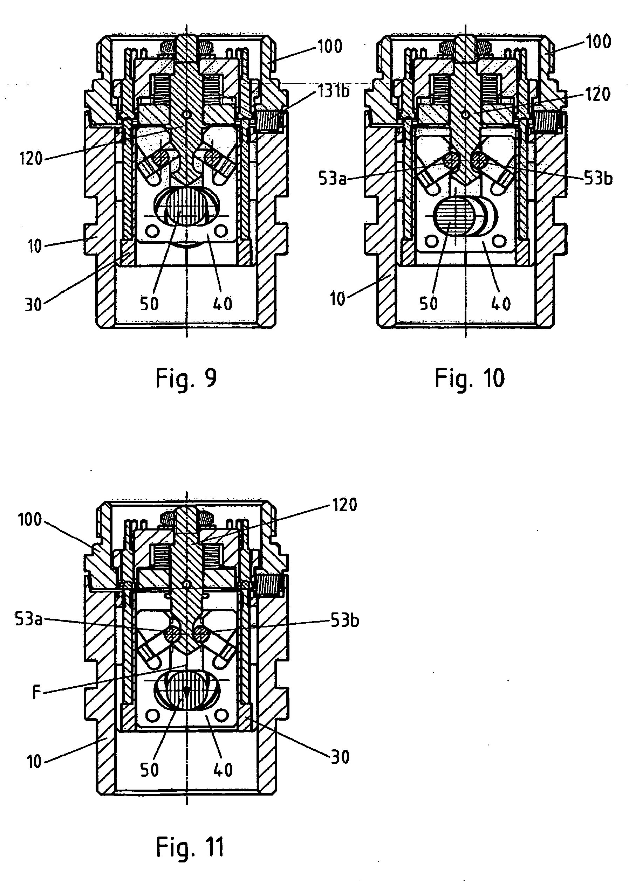

L'accouplement entre l'adaptateur 100 et le porte-outil 10 est maintenant décrit avec référence aux figures 9, 10 et 11.

Revenant maintenant aux figures 7 et 8, l'adaptateur 100 comporte un élément mâle constitué par le téton 120 à tête conique 128 et pourvu de deux rainures latérales 127a et 127b. Les figures 9, 10 et 11 montrent l'adaptateur 100 et son téton 120 en connexion à la partie fixe 10 du connecteur dans les dispositions correspondants aux positions -90°, 0° et 90° de l'excentrique 50.

La position -90° visible sur la figure 9 est une position d'ouverture. En tournant l'excentrique de 0° à -90° les goupilles étant d'une part guidées par les rainures en « V » 47 de la douille 40 et bloquées verticalement par le logements 32 de la douille fixe 30, elles s'écartent dans le plan horizontal. Lorsque les goupilles 53a et 53b sont totalement écartées le téton 120 peut y passer à travers et sortir librement de son logement.

Dans la position intermédiaire à 0° visible sur la figure 10 les goupilles 53a et 53b sont libres de se rapprocher, sous l'action des deux lames ressort 56a et 56b. Elles peuvent toutefois s'écarter, sous l'action d'une force externe, et il est possible, de pousser le téton 120 en position entre les deux goupilles 53a et 53b. Lorsque le téton est poussé verticalement, la tête conique 128 écarte les deux goupilles 53a et 53b jusqu'à ce qu'elles s'engagent dans les rainures 127a et 127b dudit téton. Dans cette position le porte-outil 10 est maintenu en position, mais pas verrouillé.

La position à + 90° de la figure 11 est une position verrouillée. Une fois que les goupilles 53a et 53b sont engagées dans les rainures et que l'excentrique 50 est tourné en cette position la douille mobile 30 se trouve dans sa position de distance maximale par rapport au plan de connexion. En cette disposition les goupilles exercent une force axiale F sur le téton 120 et solidarisent le porte-outil 10 de l'adaptateur 100.

Lorsque l'actuateur est en la position intermédiaire à 0° le porte-outil peut être clipsé simplement sur l'adaptateur 100 sans qu'aucune action sur l'actuateur 50 soit nécessaire. Le verrouillage assure simplement un positionnement exact et répétable de l'outil, mais il n'est pas requis pour maintenir l'outil en place.

Avantageusement la position verrouillée pourra aussi correspondre à un angle de rotation de l'excentrique 50 légèrement supérieur à +90°, afin d'assurer un verrouillage stable.

Il ne faut pas d'ailleurs interpréter l'exemple ci-dessus dans le sens que le dispositif de commande 50 doive obligatoirement assumer les trois positions -90°, 0° et +90°. La présente invention comprenant aussi d'autres modes de réalisation présentant des différentes positions de commande. L'excentrique pourrait aussi être remplacé par une came, une vis, un levier, un vérin électrique ou pneumatique ou par tout autre moyen d'actionnement connu.

Il est aussi possible d'inverser la position du téton et des goupilles en plaçant le premier sur le porte-outil et les secondes dans l'adaptateur.

La course de l'excentrique 50 est limitée par des moyens de limitation non représentés. Par exemple une rainure périphérique dans l'excentrique dans laquelle s'engage une goupille solidaire de l'élément fixe 10.

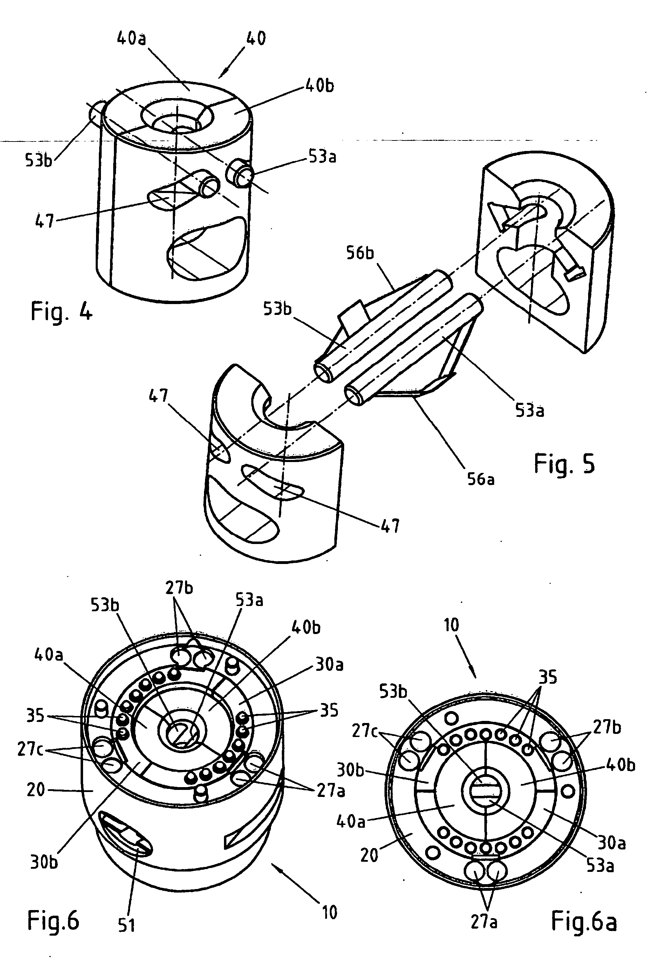

La rotation de l'excentrique 50 est, dans ce mode de réalisation de l'invention, assurée par l'entaille 51, visible sur les figures 1 et 6, pouvant s'accoupler avec la lame d'un tournevis, ou avec un actuateur motorisé d'un magasin automatique d'outils. D'autres formes d'accouplement sont toutefois possibles.

Avec référence aux figures 6, 6a, 7 et 8, la précision de positionnement relatif du porte-outil 10 par rapport à l'adaptateur 100 est assurée par les six sphères 27a, 27b, 27c de la partie mobile et les trois cylindres 131a, 131b, 131c de la partie fixe. Ces éléments définissent six points de contact indépendants et constituent une connexion isostatique, selon le principe de la liaison de Boys.

Cette manière de disposer les surfaces de positionnement se prête à des nombreuses variantes, par exemple l'on peut échanger les positions des cylindres et de sphères, ou bien remplacer les cylindres et les sphères par n'importe quelle combinaison de surfaces de positionnement donnant lieu à six points de contact indépendants, ou à une liaison isostatique, tout en restant dans le cadre de la présente invention.

Grâce à l'alignement de la force de serrage F avec l'axe du porte-outil, !a connexion n'est pas soumise à aucune action de torsion ou de flexion par l'action de verrouillage et la force F est repartie de manière égale entre les surfaces de positionnement.

Pour la même raison la résultante des forces exercées sur chacune des goupilles de positionnement 131a, 131b, 131c est aussi orientée axialement, ce qu'il n'est pas le cas dans les dispositifs de l'art antérieur.

Des essais en conditions contrôlées ont permis de vérifier l'amélioration de la répétabilité de positionnement du connecteur de l'invention. Dans l'exemple suivant une comparaison a été effectuée entre un connecteur selon ce mode de réalisation de l'invention et un connecteur de référence dans lequel le verrouillage est obtenu par un excentrique agissant directement sur un téton du porte-outil, et induisant un couple de flexion en celui-ci.

Chaque connecteur, conditionné à une température de 20 °C, a été verrouillé 10 fois, et chaque fois la position d'une pointe située 50 mm en avant par rapport au plan de connexion a été mesurée, et l'écart par rapport à la position nominale a été enregistré.

Les résultats du test, exprimés en micromètres, sont résumés dans le tableau 1.

Habituellement le porte-outil 10 porte un capteur ou une sonde à déclenchement pour mesurer des cordonnées ou inspecter des pièces mécaniques. Afin d'assurer l'alimentation et la communication, le porte-outil 10 a, sur sa face destinée à contacter l'adaptateur 100, une série de pointes de contact électrique 35, représentées sur la figure 8. Lors de la connexion ces pointes 35 contactent des éléments conducteurs correspondants sur l'adaptateur 100.

Optionnellement le porte-outil porte sur sa face au moins une goupille supplémentaire, s'engageant en un trou correspondant de l'adaptateur 100. Cette goupille sert de détrompeur et autorise une seule position de connexion, en évitant ainsi une mauvaise répétabilité de positionnement et des fausses connexions électriques.

De préférence au moins une des pointes de contact 35 est dimensionnée de manière de ne pas contacter l'élément correspondant sur l'adaptateur 100 lorsque le porte-outil est clipsé, mais pas verrouillé. Ceci permet de détecter l'absence de verrouillage du porte-outil et de prévenir des erreurs de mesure, par exemple en introduisant des instructions de contrôle dans le programme de gestion de l'appareil de mesure. D'autres moyens de détecter l'absence de verrouillage peuvent aussi être employés, selon les cas.

Dans une variante préférentielle représentée sur les figures 7 et 8 le porte-outil porte trois goupilles de détrompage 19a, 19b, 19c placées à des angles inégaux afin de protéger les pointes de contact électriques lors de la recherche de la position d'indexation. Les trois goupilles de détrompage s'insèrent en trois trous correspondants 109a, 109b, 109c de l'adaptateur 100. D'autres moyens de détrompage sont également possibles.

De préférence le téton mâle 120 est relié à l'adaptateur 100 par un ressort ou un élément élastique. Ceci permet de maîtriser la force de verrouillage ainsi que d'absorber les tolérances.

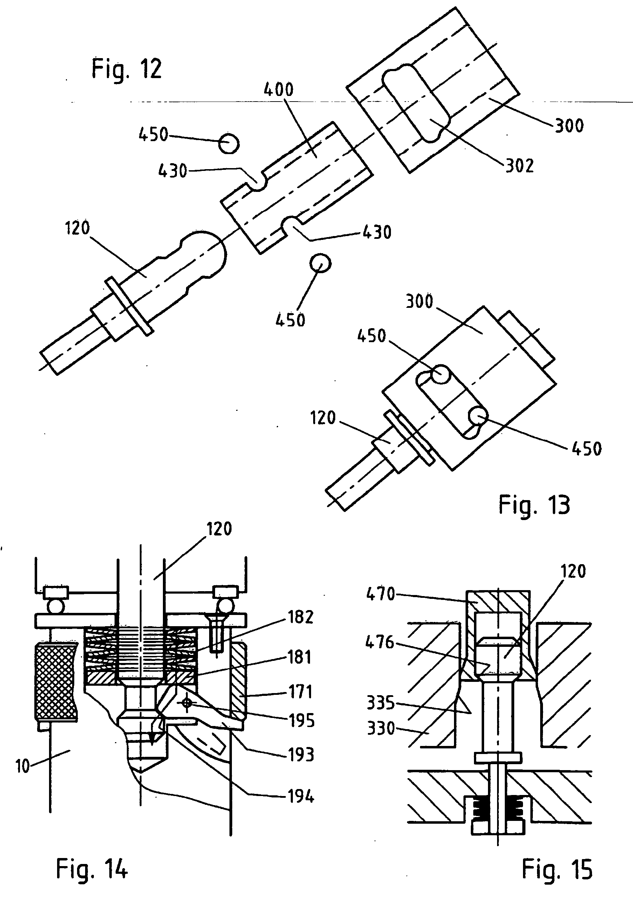

Selon un autre mode de réalisation de l'invention, illustré sur les figures 12 et 13, le porte-outil comprend une douille 400 coulissante à l'intérieur d'une douille de guidage 300. La douille coulissante 400 prévoit deux fentes 430 dans lesquelles sont logés deux rouleaux 450.

Par l'action des fentes 430 la douille coulissante définit la position axiale des deux rouleaux 450, lorsqu'elle se déplace verticalement. En revanche la distance des rouleaux 450 de l'axe du dispositif est déterminée par le profil des fenêtres 302 de la douille de guidage 300.

Lorsque la douille coulissante 400 est déplacée verticalement les goupilles se rapprochent de l'axe du connecteur et se déplacent axialement. Ce mouvement combiné permet de saisir et verrouiller le porte-outil sur l'adaptateur par le téton 120 dont la structure est similaire de celle du premier mode de réalisation déjà décrit. La force exercée sur le téton 120 est essentiellement axiale.

Des variantes de ce mode de réalisation sont aussi possibles. Par exemple les rouleaux 450 pourraient être remplacés par des billes et les fenêtres profilées 302 pourraient être omises en faveur d'un évasement de la douille de guidage 300. En ce cas la surface interne inclinée de la douille fixe 300 pousse les billes dans la direction de l'axe lorsque la douille 400 se déplace axialement.

Dans un mode ultérieur de réalisation de l'invention, représenté sur la figure 15, la douille coulissante 400 est remplacée par une fourchette flexible 470 aux pointes profilées 476. Un mécanisme d'actionnement non représenté déplace verticalement la fourchette 470 à l'intérieur d'une douille de guidage 330 dont le profil interne 335 se rétrécit en s'éloignant du plan de connexion. Les profils 476 des pointes de la fourchette 470 sont choisis de manière à rapprocher de l'axe les pointes de la fourchette 470 lorsque celle-ci est déplacée verticalement afin de saisir la gorge latérale du téton 120 et verrouiller le porte-outil sur l'adaptateur par le téton 120. La force exercée sur le téton 120 est essentiellement axiale.

Bien que la fourchette 470 soit dessinée sur la figure 15 avec deux branches, il ne faut pas interpréter cela comme une limitation de l'invention, qui comprend aussi des modes d'exécution prévoyant des fourchettes à plusieurs branches.

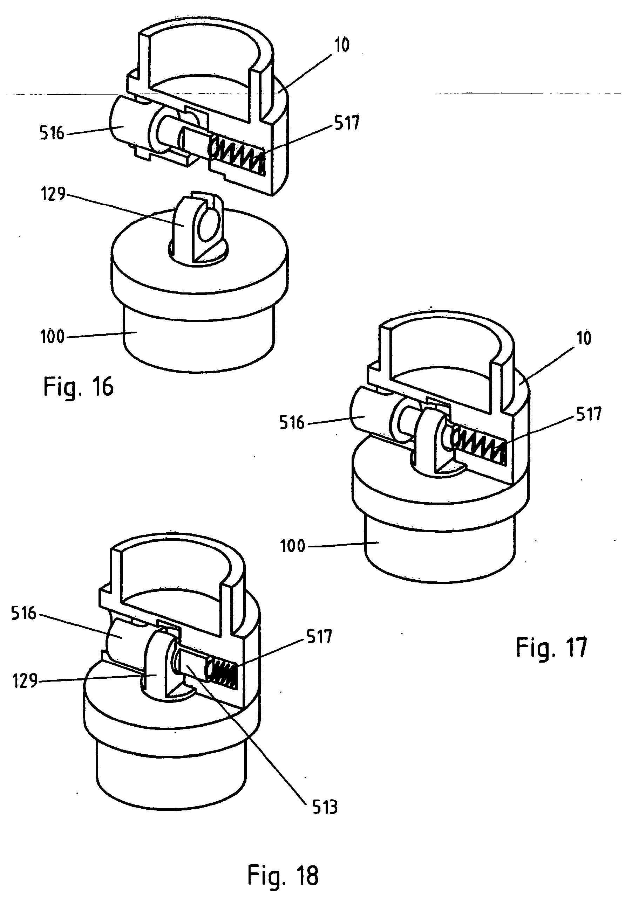

Un exemple ultérieur de réalisation sera maintenant décrit avec référence aux figures 16, 17 et 18. L'adaptateur 100 comporte en ce cas un crochet fendu 129 monté sur un ressort non représenté, dont la fonction est de maîtriser la force de verrouillage ainsi que d'absorber les tolérances.

Le porte-outil 10 comprend un excentrique 516, se terminant à une extrémité par une partie aplatie 513, et pouvant à la fois tourner autour de son axe et glisser axialement, sous l'action d'un ressort 517.

En position déverrouillée (figure 1) l'excentrique 516 est poussé par le ressort 517 et présente ainsi sa partie aplatie en correspondance avec la fente du crochet 129. En cette configuration le porte-outil peut entrer et sortir librement.

Dans la configuration représentée sur la figure 17 les deux parties sont connectées, mais pas verrouillées. Pour verrouiller la connexion il faut appuyer sur l'excentrique 516, pour qu'il s'engage dans le crochet 129, comme représenté sur la figure 18, et le tourner afin d'exercer une force de traction joignant les deux parties.

Un mode ultérieur de réalisation de l'invention sera maintenant décrit avec référence à la figure 14. Le porte-outil 10 comprend dans cet exemple au moins un levier 193 pivotant autour d'un axe 195. En position de repos le levier est en maintenu en position horizontale par l'action de la bague d'appui 181 poussée par le ressort 182. Une douille de desserrage 171 permet de remonter le levier autorisant ainsi l'introduction ou l'extraction du téton 120.

En reportant la douille 171 à sa position normale, l'extrémité 194 du levier 193 se déplace en sens axial et s'approche de l'axe de manière à bloquer et verrouiller le porte-outil 10 sur l'adaptateur 100 par le téton 120. La force exercé sur le téton 120 est essentiellement axiale.

Avantageusement le connecteur de l'invention sera employé dans une machine de mesure de cordonnées tridimensionnelles équipée de plusieurs accessoires de mesure. La partie tête 100 du connecteur est alors fixée sur le bras de la machine et les accessoires requis, chacun muni d'un porte-outil 10 sont stockés dans un rack accessible par le bras de la machine de mesure. De cette manière une machine de mesure de cordonnées équipée du système de changement d'outils de l'invention peut effectuer automatiquement des cycles de mesures comportant l'emploi de différent outils ou accessoires.

**Tableau 1**

| mesure | écart /µm | |
|---|---|---|
| | référence | invention |
| 1 | 0.56 | 0.23 |
| 2 | 1.46 | 0.26 |
| 3 | 1.52 | 0.63 |
| 4 | 2.03 | 0.24 |
| 5 | 2.34 | 0.64 |
| 6 | 1.84 | 0.35 |
| 7 | 1.61 | 0.23 |
| 8 | 0.95 | 0.3 |
| 9 | 1.3 | 0.4 |
| 10 | 2.84 | 0.22 |
| **moyenne** | **1.645** | **0.35** |

## Revendications

1. Dispositif de changement d'outils, comprenant :
au moins un porte-outil détachable (10);
un adaptateur (100) adapté pour être fixé à une machine à mesurer des cordonnées ;
des surfaces de positionnement (27a, 27b, 27c, 131a, 131b, 131c) arrangées sur ledit porte-outil (10) et sur ledit adaptateur (100) définissant une liaison isostatique détachable entre ledit porte-outil et ledit adaptateur;
un premier organe de couplage dans ledit porte-outil et un second organe de couplage (120) dans ledit adaptateur;
un actuateur (50) dans ledit adaptateur (100) ou dans ledit porte-outil (10) entraînant l'un desdits premier organe de couplage ou second organe de couplage, ledit actuateur (50) pouvant assumer une position de verrouillage et une position de déverrouillage ;
lesdits premier et second organes de couplage bloquant ledit porte-outil (10) relativement audit adaptateur (100) dans une position relative définie par ladite liaison isostatique lorsque ledit actuateur est dans ladite position de verrouillage,
dans lequel la force exercée lors du verrouillage sur lesdits premier et second organes de couplage est alignée à un axe dudit porte-outil, **caractérisé en ce que** ledit premier organe de couplage comprend deux goupilles (53a, 53b) ou deux rouleaux (450) et ledit second organe de couplage est un téton (120) pourvu de deux rainures latérales (127a, 127b).

2. Dispositif de changement d'outils selon la revendication 1, dans lequel les forces exercée lors du verrouillage sur lesdits premier et second organes de couplage sont également partagées entre lesdites surfaces de positionnement (27a, 27b, 27c, 131 a, 131b, 131c).

3. Dispositif de changement d'outils selon la revendication 1, dans lequel ledit actuateur (50) entraîne l'un desdits premier organe de couplage ou second organe de couplage dans une première direction parallèle à un axe dudit porte-outil et dans une seconde direction, différente de ladite première direction.

4. Dispositif de changement d'outils selon la revendication 1, comprenant :
un volume vide à l'intérieur dudit porte-outil (10);
un excentrique (50) entraînant une douille (40) à l'intérieur dudit volume vide dans ladite première direction ;
deux fentes latérales (47) de ladite douille (40) inclinées par rapport à ladite première direction et convergeant vers ledit axe ;
dans lequel :
lesdites goupilles (53a, 53b) traversent ladite douille (40) par lesdites deux fentes (47) ;
les extrémités de chacune desdites goupilles s'engagent dans des cavités s'ouvrant vers ledit volume vide.

5. Dispositif de changement d'outils selon la revendication 4, comprenant des éléments résilients (56a, 56b) interposés entres lesdites goupilles et ladite douille.

6. Dispositif de changement d'outils selon la revendication 1, comprenant :
une première douille (300) fixe ;
une seconde douille (400) pouvant coulisser à l'intérieur de ladite première douille ;
la surface latérale de la dite seconde douille (400) présentant au moins deux gorges latérales dans lesquelles s'engagent au moins deux rouleaux (450) ;
la surface latérale de ladite première douille présentant deux fenêtres (302) dans lesquelles s'engagent les extrémités desdits au moins deux rouleaux (450), pour pousser lesdits rouleaux dans la direction dudit axe lorsque ladite seconde douille est coulissée dans ladite première direction.

7. Dispositif de changement d'outils selon la revendication 1, dans lequel ledit actuateur admet aussi une position d'insertion, autorisant le clipsage entre ledit porte-outii (10) et ledit adaptateur (100) et le maintien dudit porte-outil (10).

8. Dispositif de changement d'outils selon l'une des revendications précédentes comprenant un ou plus connexions électriques (35) entre ledit adaptateur (100) et ledit porte-outil (10).

9. Dispositif de changement d'outils selon la revendication 8, dans lequel ledit actuateur admet aussi une position d'insertion, autorisant le clipsage entre ledit porte-outil (10) et ledit adaptateur (100) et dans lequel au moins une desdites connexions électriques est dimensionnée de manière de rester ouverte lorsque ledit actuateur est en ladite position d'insertion.

10. Dispositif de changement d'outils selon l'une des revendications précédentes comprenant au moins un élément de détrompage (19a, 19b, 19c).

11. Dispositif de changement d'outils selon l'une des revendications précédentes comprenant une pluralité de porte-outil stockés dans un magasin accessible par ledit adaptateur (100), et au moins un dispositif d'actionnement automatique pour agir sur lesdits actuateurs (50) desdits porte-outil.

12. Procédé de fixation d'un outil sur une machine à mesurer des cordonnées comprenant les étapes suivantes :
clipser un porte-outil détachable (10) sur un adaptateur (100) de ladite machine;
verrouiller ledit porte-outil en actionnant un actuateur (50) qui entraîne ledit porte-outil contre ledit adaptateur (100) de manière de déterminer une liaison isostatique entre ledit porte-outil (10) et ledit adaptateur (100).

13. Procédé selon la revendication 12 dans lequel ledit entraînement est effectué par une paire de goupilles dudit porte-outil s'engageant dans un téton dudit adaptateur.

## Claims

1. Tool-switching device, comprising:
at least one removable tool-carrier (10);
an adapter (100) adapted for being fastened to a machine for measuring coordinates;
positioning surfaces (27a, 27b, 27c, 131a, 131b, 131c) arranged on said tool-carrier (10) and on said adapter (100) defining a removable isostatic connection between said tool-carrier and said adapter;
a first coupling means in said tool-carrier and a second coupling means (120) in said adapter;
an actuator (50) in said adapter (100) or in said tool-carrier (10) driving one of said first coupling means or second coupling means, said actuator (50) being capable of taking up a locked position and an unlocked position;
said first and second coupling means locking said tool-carrier (10) relatively to said adapter (100) in a relative position defined by said isostatic connection when said actuator is in said locked position,
wherein the force exerted during locking on said first and second coupling means is aligned to an axis of said tool-carrier, **characterized in that** said first coupling means comprises two pins (53a, 53b) or two rollers (450) and said second coupling means is a stud (120) provided with two lateral grooves (127a, 127b).

2. Tool-switching device according to claim 1, wherein the forces exerted during locking on said first and second coupling means are also distributed between said positioning surfaces (271, 27b, 27c, 131a, 131b, 131c).

3. Tool-switching device according to claim 1, wherein said actuator (50) drives one of said first coupling means or second coupling means in a first direction parallel to the axis of said tool-carrier and in a second direction, different from said first direction.

4. Tool-switching device according to claim 1, comprising:
an empty volume inside said tool-carrier (10);
an eccentric (50) driving a bushing (40) inside said empty volume in said first direction;
two lateral slits (47) of said bushing (40) inclined relatively to said first direction and converging towards said axis;
wherein:
said pins (53a, 53b) pass through said bushing (40) through said two slits (47);
the extremities of each of said pins engage in recesses opening towards said empty volume.

5. Tool-switching device according to claim 4, comprising resilient elements (56a, 56b) interposed between said pins and said bushing.

6. Tool-switching device according to claim 1, comprising:
a first fixed bushing (300);
a second bushing (400) capable of sliding inside said first bushing;
the lateral surface of said second bushing (400) having at least two lateral gorges into which at least two rollers (450) engage;
the lateral surface of said first bushing having two windows (302) in which the extremities of said at least two rollers (450) engage to push said rollers in the direction of said axis when said second bushing is slid in said first direction.

7. Tool-switching device according to claim 1, wherein said actuator also allows an insertion position, allowing clasping between said tool-carrier (10) and said adapter (100) and holding of said tool-carrier (10).

8. Tool-switching device according to one of the preceding claims comprising one or several electric connections (35) between said adapter (100) and said tool-carrier (10).

9. Tool-switching device according to claim 13, wherein said actuator also allows an insertion position, allowing clasping between said tool-carrier (10) and said adapter (100) and wherein at least one of said electric connections is dimensioned so as to remain open when said actuator is in said insertion position.

10. Tool-switching device according to one of the preceding claims, comprising at least one alignment element (19a, 19b, 19c).

11. Tool-switching device according to one of the preceding claims, comprising a plurality of tool-carriers stored in a magazine accessible by said adapter (100) and at least one automatic actuating device for acting on said actuators (50) of said tool-carriers.

12. Method for fastening a tool on a machine for measuring coordinates, comprising the following steps:
clasping a removable tool-carrier (10) on an adapter (100) of said machine;
locking said tool-carrier by actuating an actuator (50) driving said tool-carrier against said adapter (100) so as to determine an isostatic connection between said tool-carrier (10) and said adapter (100).

13. Method according to claim 12, wherein said driving is effected by a pair of pins of said tool-carrier engaging in a stud of said adapter.

## Patentansprüche

1. Werkzeugswechselvorrichtung, mit:
mindestens einem abnehmbaren Werkzeughalter (10);
einem Adapter (100), der zur Befestigung auf einer Koordinatenmessmaschine angepasst ist;
Positionierungsflächen (27a, 27b, 27c, 131a, 131b, 131c), welche auf dem besagten Werkzeughalter (10) und auf dem besagten Adapter (100) angeordnet sind und eine isostatische Verbindung zwischen dem besagten Werkzeughalter und dem besagten Adapter definieren;
einem ersten Kupplungsteil in dem besagten Werkzeughalter und einem zweiten Kupplungsteil (120) in dem besagten Adapter;
einem Stellantrieb (50) im besagten Adapter (100) oder im besagten Werkzeughalter (10), der eines der besagten ersten Kupplungsteile oder zweiten Kupplungsteile antreibt, wobei der besagte Stellantrieb (50) eine Verriegelungsposition und eine Entriegelungsposition einnehmen kann;
wobei das besagte erste und zweite Kupplungsorgan den besagten Werkzeughalter in Bezug auf den besagten Adapter (100) in einer relativen, durch die besagte isostatische Verbindung definierten Position blockiert, wenn sich der besagte Stellantrieb in der besagten Verriegelungsposition befindet,
worin die Kraft, welche während der Verriegelung auf das besagte erste und zweite Kupplungsteil ausgeübt wird, mit einer Achse des besagten Werkzeughalters ausgerichtet ist,
**dadurch gekennzeichnet, dass** das besagte erste Kupplungsorgan zwei Stifte (53a, 54b) oder zwei Walzen (450) umfasst, und dass das besagte zweite Kupplungsteil ein Zapfen (120) mit zwei seitlichen Rillen (127a, 127b) ist.

2. Werkzeugswechselvorrichtung gemäss Anspruch 1, worin die Kräfte, welche während der Verriegelung auf das erste und zweite Kupplungsteil ausgeübt werden, auch zwischen den besagten Positionierungsflächen (27a, 27b, 27c, 131a, 131b, 131c) aufgeteilt sind.

3. Werkzeugswechselvorrichtung gemäss Anspruch 1, worin der besagte Stellantrieb (50) eines der besagten ersten Kupplungsteile oder zweiten Kupplungsteile in eine erste Richtung parallel zur Achse des besagten Werkzeughalters und in eine zweite, zur ersten Richtung unterschiedliche Richtung antreibt.

4. Werkzeugswechselvorrichtung gemäss Anspruch 1, mit:
einem Leerraum innerhalb des besagten Werkzeughalters (10);
einem Exzenter (50), der eine Hülse (40) innerhalb des besagten Leerraums in eine erste Richtung antreibt;
zwei Seitenschlitzen (47) der besagten Hülse (40), welche in Bezug auf die besagte erste Richtung geneigt sind und gegen die besagte Achse konvergieren;
worin die besagten Stifte (53a, 53b) die besagte Hülse (40) durch die besagten zwei Schlitzen (47) durchdringen;
wobei die Enden jeder der besagten Stifte in sich gegen den besagten Leerraum öffnende Aushöhlungen eindringen.

5. Werkzeugswechselvorrichtung gemäss Anspruch 4, mit elastischen Elementen (56a, 56b), welche zwischen den besagten Stiften und der besagten Hülse eingeschoben werden.

6. Werkzeugswechselvorrichtung gemäss Anspruch 1, mit:
einer ersten festen Hülse (300);
einer zweiten Hülse (400), welche innerhalb der besagten ersten Hülse gleiten kann;
wobei die Seitenfläche der besagten zweiten Hülse (400) mindestens zwei seitlichen Rillen aufweist, in welche mindestens zwei Rollen (450) eindringen;
wobei die Seitenfläche der besagten ersten Hülse zwei Fenster (302) aufweist, in welche die Enden der besagten mindestens zwei Rollen (450) eindringen, um die besagten Rollen in die Richtung der besagten Achse zu schieben, wenn die besagte zweite Hülse in die besagte erste Richtung verschoben wird.

7. Werkzeugswechselvorrichtung gemäss Anspruch 1, worin der besagte Stellantrieb auch eine Einfügungsposition erlaubt, was einen Klemmverschluss zwischen dem besagten Werkzeughalter (10) und dem besagten Adapter (100) und das Halten des besagten Werkzeughalters (10) ermöglicht.

8. Werkzeugswechselvorrichtung gemäss einem der vorhergehenden Ansprüche, mit einer oder mehreren elektrischen Verbindungen (35) zwischen dem besagten Adapter (100) und dem besagten Werkzeughalter (10).

9. Werkzeugswechselvorrichtung gemäss Anspruch 8, worin der besagte Stellantrieb auch eine Einfügungsposition erlaubt, was einen Schnappverschluss zwischen dem besagten Werkzeughalter (10) und dem besagten Adapter (100) ermöglicht, und worin mindestens eine der besagten elektrischen Verbindungen so dimensioniert ist, dass sie offen bleibt, wenn der besagte Stellantrieb sich in der besagten Einfügungsposition befindet.

10. Werkzeugswechselvorrichtung gemäss einem der vorhergehenden Ansprüche, mit mindestens einem Ausrichtungselement (19a, 19b, 19c).

11. Werkzeugswechselvorrichtung gemäss einem der vorhergehenden Ansprüche, mit einer Vielzahl von Werkzeughaltern, die in einem dem besagten Adapter (100) zugänglichen Magazin gelagert sind, und mindestens einer automatischen Antriebsvorrichtung, um auf die besagten Stellantriebe (50) des besagten Werkzeughalters zu wirken.

12. Verfahren zur Befestigung eines Werkzeugs auf einer Koordinatenmessmaschine, mit den folgenden Schritten:
ein abnehmbarer Werkzeughalter (10) wird auf einen Adapter (100) der besagten Maschine geklemmt;
der besagte Werkzeughalter wird zugeriegelt, indem einen Stellantrieb (50) getätigt wird, welcher den besagten Werkzeughalter gegen den besagten Adapter (100) antreibt, so dass eine isostatische Verbindung zwischen dem besagten Werkzeughalter (10) und dem besagten Adapter (100) veranlasst wird.

13. Verfahren gemäss Anspruch 12, worin das besagte Antreiben durch ein Paar Stifte des besagten Werkzeughalters, welche in einen Riegel des besagten Adapters eindringen, durchgeführt wird.
